# EUROPEAN PATENT APPLICATION

(11) **EP 3 937 469 A1**
(43) Date of publication of application: **12.01.2022**
(21) Application number: 20184587.2
(22) Date of filing: 07.07.2020
(51) Int. Cl.: H04L 29/12, H04L 12/707, H04L 29/06

(54) **DOMAIN NAME SYSTEM IN COMBINATION WITH A MULTIPATH NETWORK PROTOCOL**

(71) Applicant: Deutsche Telekom AG, 53113 Bonn (DE)
(72) Inventor: Amend, Markus, 63667 Nidda (DE); Bogenfeld, Eckard, 67316 Carlsberg (DE)
(74) Representative: Braun-Dullaeus Pannen Emmerling Patent- & Rechtsanwaltspartnerschaft mbB

(57) **Abstract**

Method for domain name resolution of an access device (10) that is configured to have a multipath access via at least two access paths (31, 32) to a data network (30) comprising the following steps:
- a resolving request step (100), wherein an application (11) of the access device (10) requests a requested IP address on basis of a present domain name or requests a requested domain name on basis of a present IP address by a resolving request (1);
- a domain name system query step (101), wherein a resolver (12) initiates a transmission of at least one domain name query (2) on basis of the resolving request (1);
- a transmission step (104), wherein the domain name query (2) is sent by the access device (10) to at least one name server (20) using a multipath transmission protocol that supports multipath access via at least two of the access paths (31, 32); and
- a receiving step (105), wherein the access device (10) receives a domain name response (3) that is sent by at least one name server (20) and comprises the requested IP address or the requested domain name.

## Description

This invention relates to a method for domain name resolution of an access device that is configured to have a multipath-access via at least two access paths to a data network. In addition, this invention relates to an access device for domain name resolution, wherein the access device is configured to have a multipath-access via at least two access paths to a data network. Furthermore, this invention relates to a system for domain name resolution. Moreover, this invention relates to a computer product for domain name resolution.

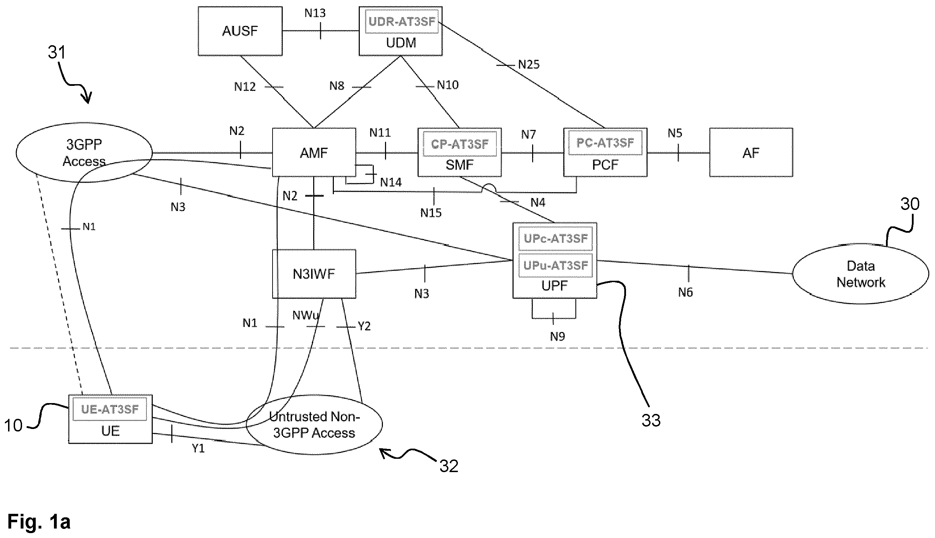

Internet network operators typically provide one or several access paths for customers such as fixed path (e.g. Digital Subscriber Line, DSL), Wireless Local Area Network (e.g. Wi-Fi via a public hotspot) or cellular path (e.g. 2G to 5G). Even if those customers own a user equipment (UE) like a smartphone, which are potentially capable of connecting to multiple accesses simultaneously, they don't make use of them due to lack of multi-connectivity technologies. In particular for smartphones, a simultaneous connectivity to Wi-Fi and cellular network is common, while applications are stuck to one access path unable to benefit from a second available access path in terms of reliability and speed. For example, multipath connectivity architectures like 3GPP Access Traffic Steering Switching and Splitting (ATSSS) manages simultaneous connectivity for UEs over cellular (3GPP access) and non-cellular access (untrusted non-3GPP access e.g. Wi-Fi) (see Fig. 1a).

For domain name resolution, which means the resolution of a requested IP address on the basis of a present domain name or a requested domain name on the basis of a present IP address, an access device sends a Domain Server System (DNS) request to a name server (NS), which contains a mapping between IP addresses and corresponding domain addresses. In the above described multipath-access scenario the domain name resolution by the user equipment is usually bounded to a preferred name server and possibly additional lower priority name servers, wherein the user equipment sends a single DNS request over one access path at a time. When the user equipment knows multiple name servers, such as a nameserver of a multipath connectivity network operator, a name server predefined in the operating system (e.g. Google 8.8.8.8), a name server defined by the cellular network operator and a name server defined by the Wi-Fi network operator, it sends a single DNS request to a single selected name server. For the transmission of the DNS request typically the User Datagram Protocol (UDP) is used, which uses only one access path. By transmitting the DNS request over one access path, the presence of multipath or multi-access operation is useless in terms of reliability. Assuming a simultaneous connectivity over Wi-Fi and cellular, wherein the DNS request is bounded to the Wi-Fi, a failure with the Wi-Fi connection would lead to a failed DNS request (e.g. Name Server not reachable). In that case an intended communication, usually following a successful DNS request, cannot be established or will be delayed. Thus, a DNS request over one access path solely, breaks the concept of multipath access when it promises to provide more reliability and accessibility.

The objective of the underlying invention is to provide a method for domain name resolution with a faster response time, better efficiency, higher reliability and improved accessibility. In addition, it is an objective of the invention to provide an access device, which is suitable to perform the access device related method steps. Furthermore, it is an objective of this invention to provide a system, which is suitable to perform method. Moreover, it is objective invention to provide to provide a program product for domain name resolution, when executed by the access device, causes access device to perform the access device related method steps.

The underlying objective is solved by a method which has the features of the first claim. Advantageous embodiments of the invention are given by the dependent claims.

The method according to the invention comprises the following steps:
- a resolving request step, wherein an application of the access device requests a requested IP address on basis of a present domain name or requests a requested domain name on basis of a present IP address by a resolving request;
- a domain name system query step, wherein a resolver initiates a transmission of at least one domain name query on basis of the resolving request;
- a transmission step, wherein the domain name query is sent by the access device to at least one name server using a multipath transmission protocol that supports multipath access via at least two of the access paths; and
- a receiving step, wherein the access device receives a domain name response that is sent by at least one name server and comprises the requested IP address or the requested domain name.

Starting point of method for domain name resolution is the resolving request by the application of the access device to the resolver, wherein it for example demands the requested IP address on the basis of the present domain name. On the basis of the resolving request the resolver initiates a domain name query. The key point of the underlying invention is that the domain name query is transmitted to at least one name server using a multipath transmission protocol that supports multipath access via at least two access paths. A name server that receives a respective domain name query sends a corresponding domain name response to the access device comprising the requested IP address or the requested domain name. Preferably, the access device is a home gateway, a router or a user equipment, wherein a user equipment is preferably a smartphone, a tablet, a laptop or a PC.

The transmission of the domain name query by using a multipath transmission protocol has the advantage that the available multiple access path could be used in order to significantly improve the reliability of the domain name resolution. Furthermore, an additional sending of the domain name request is prevented/less likely and thus the delay reduced, since the accessibility of the name server is improved by the availability of multiple access paths.

According to a preferred aspect of the invention the method for domain name resolution comprises an evaluation step, in which the access device evaluates whether it is connected to the data network via a multipath connectivity operator that supports at least the multipath transmission protocol, and/or in which the access device evaluates whether the nameserver supports at least the multipath transmission protocol. The multipath connectivity operator is part of a multi connectivity network that provides the multipath access to the data network comprising at least two access paths and the multipath connectivity operator. The multipath connectivity operator is an operator that provides the multipath access of the access device to the data network via at least two access paths, whereas the at least two access paths terminate/merge at the multipath connectivity operator. An example for a multipath connectivity network/architecture comprising a multipath connectivity operator is the 3GPP Access Traffic Steering Switching and Splitting (ATSSS), which manages simultaneous connectivity for a UE over cellular (3GPP access) and non-cellular access (untrusted non-3GPP access e.g. Wi-Fi). A further example for a multipath connectivity network operator is an over-the-top multi connectivity operator, which manages simultaneous connectivity for an access device over a first access network and a second access network. By the evaluation step it is checked whether the domain name query could be transmitted to the name server with a multipath transmission protocol, to avoid unnecessary failed attempts using a multipath transmission protocol.

In an exemplary scenario the multipath connectivity operator supports the multipath transmission protocol, but the name server does not; then the domain name query via multiple access paths is implemented by using the multipath connectivity network, while the domain name query arrives at the name server using a protocol supported by the name server. In this scenario the multipath connectivity is terminated within/at the multipath connectivity operator. In another exemplary scenario the name server does support a multipath transmission protocol then the domain name query is sent via at least one of the access path to the name server using the multipath transmission protocol. In this scenario there is an end-to-end multipath connectivity to the name server. In yet another exemplary scenario the multipath connectivity operator and the name server support the multipath transmission protocol; then the domain name query via multiple access paths is implemented by using the multipath connectivity operator and the domain name query arrives at the name server using the multipath transmission protocol.

According to a preferred aspect of the invention the method for domain name resolution comprises a selection step, in which the multipath transmission protocol for the transmission of the domain name query is selected, when a multipath connectivity operator and/or the name server support the selected multipath transmission protocol. By the selection step the access device is enforced to use the multipath transmission protocol, when the domain name query could be transmitted to the name server with a multipath transmission protocol. This ensures a higher reliability and accessibility of the domain name resolution because the multipath access is utilized anyhow by the usage of the multipath transmission protocol.

Preferably, the selection step is performed by the resolver, wherein the resolver initiates the transmission of the domain name query with a multipath transmission protocol supported by the multipath connectivity operator and/or the name server. The resolver preferably generates a domain name query using a transmission protocol, which results in the domain name query transferred from the access device to the name server having the multipath transmission protocol.

According to a preferred aspect of the invention the resolver generates an initial domain name query using a transmission protocol that is transformed by an operating system element into the domain name query using the multipath transmission protocol, or the resolver generates the domain name query using the multipath transmission protocol. The operating system element is located in the operation system (e.g. Android) of the access device and transforms the initial domain name query of the resolver into the transmitted domain name query using the multipath transmission protocol. For example, the resolver generates an initial domain name query with a single-path transmission protocol, like the Transmission Control Protocol (TCP), which is then transformed into the multipath transmission protocol, like Multipath Transmission Control Protocol (MPTCP). This takes into account transmission protocols, which are automatically transformed into multipath transmission protocols by the operating system. Alternatively, the resolver directly generates the transmitted domain name query with the multipath transmission protocol. In both cases the transmitted domain name query has the multipath transmission protocol that provides a higher reliability and accessibility by utilization of multiple access path.

According to a preferred aspect of the invention the selection step uses a pre-defined selection logic to select the multipath transmission protocol out of a set of multipath transmission protocols supported by the name server and/or the multipath connectivity operator. In the presence of several supported multipath transmission protocols the selection logic provides the possibility to choose the preferred multipath transmission on certain criteria. Preferably, the selection is made on transmission speed, transmission reliability, computation overhead, pre-defined prioritization, user selection and/or selection by a multipath connectivity operator provider. In this way a domain name resolution could be provided with a higher flexibility in terms of reliability, accessibility and response time.

According to a preferred aspect of the invention the access device sends a request to a multipath connectivity operator and/or the name server to obtain the supported multipath transmission protocols. It is advantageous for the access device to inquire which multipath transmission protocols are supported, so that the access device can select a supported protocol in order to avoid unsuccessful requests and resulting time delays.

According to a preferred aspect of the invention the multipath connectivity operator and/or the name server informs the access device about the supported multipath transmission protocols. This informing could be performed on request by the access device and/or automatically by the multipath connectivity operator and/or the name server, for example when the access device is first connected the multipath connectivity operator. Preferably, the supported multipath transmission protocols are stored within the access device. The stored supported multipath transmission protocols preferably form a least a part of the set of supported multipath transmission protocols with are used within the selection step. For example, one of the stored multipath transmission protocols is used for an initial domain name resolution when the access device is initially connected to a multipath connectivity operator.

According to a preferred aspect of the invention the domain name query is encapsulated to the multipath transmission protocol, in order to be transmitted within the transmission step. The capsulated domain name query is transmitted to the multipath connectivity operator with the multipath transmission protocol or to the name server with the multipath transmission protocol via an end-to-end multipath connection. The encapsulation is then reversed so that the name server will receive the domain name query. For example, a domain name query with a single-path transmission protocol, like the User Datagram Protocol (UDP), is encapsulated into a multipath transmission protocol and transmitted to the name server utilizing the multipath access. The encapsulation is reversed, respectively the single-path transmission protocol restored, to be received or processed by the name server. In this way, even a resolver that does not support multipath transmission protocols can take advantage of the multipath access.

According to a preferred aspect of the invention the multipath transmission protocol is equipped with a redundant scheduler that generates multiple multiplied domain name queries by duplicating the domain name query and sends those multiplied domain name queries to multiple name servers and/or via different access paths. The redundant scheduler generates at least two multiplied domain name queries with the multipath transmission protocol. Those multiplied domain name queries could be sent to one name server via different access paths or to different name servers known to the redundant scheduler via different paths or the same access path. By the usage of a redundant scheduler advantageously leads to an improved reliability, accessibility and response time.

According to a preferred aspect of the invention the application is informed about the supported multipath transmission protocols. This means that the application that makes the request for the domain name resolution knows the multipath transmission protocols supported by the multipath connectivity network and/or the name server. The application can therefore also work towards the use of a multipath transmission protocol. This is in particular preferable when the resolver is implemented within the application.

According to a preferred aspect of the invention the access device is part of the multipath connectivity network comprising the multipath connectivity operator, wherein the name server is located within the multi connectivity network. Because the name server is located in the multipath connectivity operator, the response time is advantageously reduced. Alternatively, the name server is located outside the multipath connectivity network, in particular within the data network.

According to a preferred aspect of the invention the multipath transmission protocol is the Multipath Transmission Control Protocol (MPTCP) or Multipath Quick UDP Internet Connection (MP-QUIC) or Multipath Datagram Congestion Control Protocol (MP-DCCP) or Stream Control Transmission Protocol (SCTP). This multipath transmission protocols are typically used to provide multiple access path, thus allowing an easy implementation of the invention on a large number of access devices.

The underlying objective is also solved by an access device for domain name resolution, wherein the access device is configured to have a multipath-access via at least two access paths to a data network comprising:
- an application that is configured to request a requested IP address on basis of a present domain name or to request a requested domain name on basis of a present IP address by a resolving request, and
- a resolver that is configured to initiate a transmission of a domain query on basis of the resolving request,
- wherein the access device is configured to send the domain name query to at least one name server using a multipath transmission protocol that supports multipath access via at least two of the access paths; and
- wherein the access device is configured to receive a domain name response that is sent by at least one name server and comprises the requested IP address or the requested domain name.

This access device is configured to perform the method steps of the above described method. In particular, to send the domain name query to at least one name server using a multipath transmission protocol that supports multipath access via at least two of the access paths.

The underlying problem is also solved by a system for domain name resolution that comprises an access device described above and at least one name server, wherein the name server is configured to receive the domain name query and to send the domain name response to the access device comprising the requested IP address or the requested domain name, and wherein the access device and the name server are connected via at least two access paths.

This system is configured to perform the method steps of the above described method. In particular, to send the domain name query to at least one name server using a multipath transmission protocol that supports multipath access via at least two of the access paths.

The underlying problem is also solved by a computer program product for domain name resolution which, when executed by an access device, causes the access device to perform the above described method steps.

In the following, preferred embodiments of the present invention are described with reference to the figures:
- Fig. 1a:: shows a schematic drawing of a 3GPP ATSSS architecture as example of a multi connectivity network/architecture,
- Fig. 1b:: shows a schematic drawing of an exemplary over-the-top multi connectivity network/provider,
- Fig. 2:: shows a drawing of a system comprising an access device and a name server according to the underlying invention, and
- Fig. 3: shows a flow chart of the method steps of the underlying invention.

Below, features of the invention are explained by way of a preferred embodiment. The present disclosure is not limited to the specifically named combinations of features. Rather, the features mentioned here can be combined arbitrarily into inventive embodiments, unless this is expressly excluded.

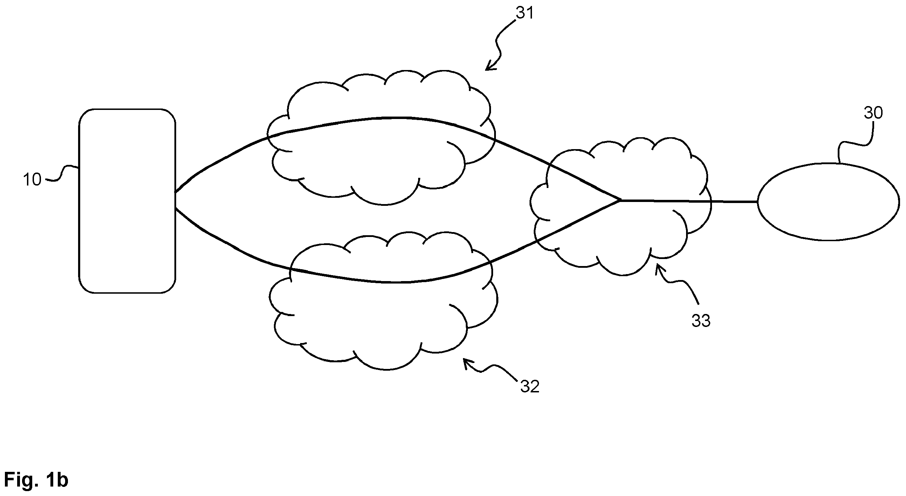

Fig. 1a shows an exemplary multi connectivity network/architecture according to the invention as an ATSSS architecture as defined by the 3GPP TS 23.501. The ATSSS manages simultaneous connectivity for an access device 10, here user equipment (UE), over a first access path 31, here a cellular (3GPP access) and a second access path 32, here non-cellular access (Untrusted Non-3GPP access, e.g. Wi-Fi). As shown in Fig. 1, the access device 10 connects to a data network 30 over cellular (first access path 31, 3GPP Access) and Wi-Fi (second access path 32, Untrusted Non-3GPP access) using the N3 interface towards the ATSSS-UPF (User Plane Function) part of a 5G core. The untrusted non-3GPP access path is interconnected with the 5G core through the non-3GPP Interworking entity/function (N3IWF), which is responsible to attach the non-3GPP access to the 5G core. The UPF can be understood as an interface between access device 10 and data network 30 (e.g. Internet) taking responsibility for traffic management. Within the 3GPP ATSSS architecture the first access path 31 (3GPP Access), the second access path 32 (Untrusted Non-3GPP access) and the termination point, here UPF, which corresponds to a multi connectivity operator 33, form a multipath connectivity network that provides the multipath access of the access device 10 to the data network 30.

Other elements/functions forming part of the 5G core as shown in FIG. 1 are: Authentication Server Function (AUSF), Unified Data Management (UDM), Access and Mobility Management Function (AMF), Session Management Function (SMF), Policy Control Function (PCF) and Application Function (AF) including the control plane and user plane. In addition, Fig. 1 also shows the name of the interfaces that are exposed by each of these elements.

Fig. 1b shows an exemplary architecture for an over-the-top (OTT) multi connectivity network according to an embodiment of the invention. The principle of this architecture requires a multi connectivity access device 10 able to connect to a data network 30, e.g. Internet. The access device is configured to connect the data network 30 via a first access path 31, here the first access network, and over a second access path 32, here the second access network.

Both access paths 31, 32 are combined at a termination point, here an OTT multi connectivity operator 33, and connected to the data network 30, e.g. Internet. The multi connectivity operator 33 has preferably functions of authentication and traffic management. For example, these functions are located in the multi connectivity operator's cloud, e.g. located in a public data center. Optionally, the multi connectivity comprising functions of authorization and accounting and policy management. These optional functions can be separated by e.g. Network Function Virtualization (NFV) or operated in one entity, wherein this entity or these entities can run on bare metal servers or executed in virtual environments like Virtual Machines (VM) or in user space isolated environments.

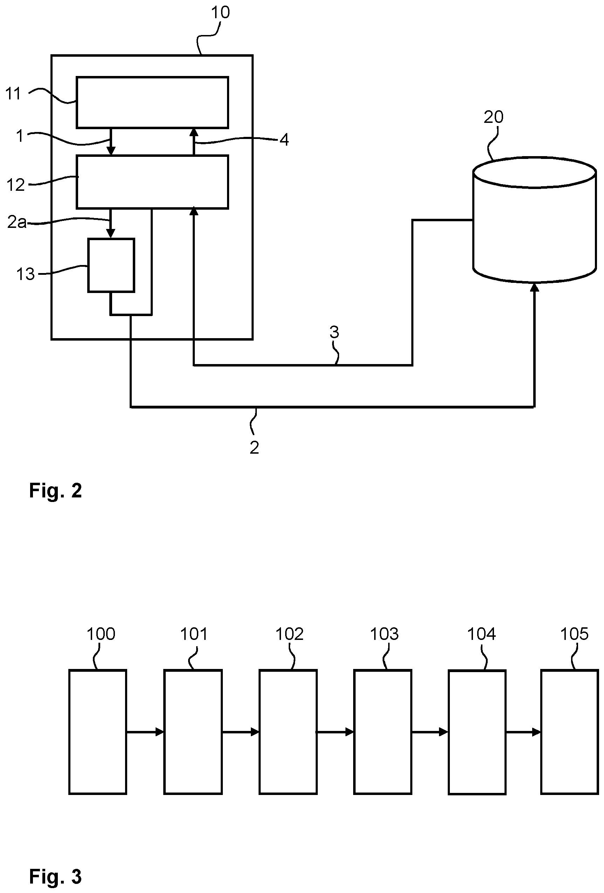

Fig. 2 shows a schematic drawing of a system comprising an access device 10 and a name server 20. The access device 10 is preferably a home gateway, a router or a user equipment, wherein the user equipment is for example a tablet, a smartphone, or a PC, configured to have a multipath access via at least two access paths 31, 32. As shown in Fig. 1, the multipath access between the access device 10 and the data network 30 is provided by the multipath connectivity network. The access device 10 comprises an application 11, a resolver 12 and an operation system element 13. These functional elements are preferably implemented by computer programs that can be executed on the access device 10 and/or by suitably configured electronic components, such as electronic chips. The name server 20 is a DNS server, which contains a mapping between an IP address and a corresponding domain name address, in addition they also contain other information related to the IP address such as location, access speed, provider identification, security information and the like. Either the name server 20 is located within the multi connectivity operator 33 or it is located outside the multipath connectivity operator 33, for example within the data network 30.

The application 11 of the access device 10 demands or requests a requested IP address on basis of a present domain name (e.g. www.example.com) or a requested domain name on basis of a present IP address (e.g. 123.45.67.89) by a resolving request 1 within a resolving request step 100. On basis of the resolving request 1 the resolver 12 initiates a transmission of a domain name query 2 within a domain name system query step 101. The domain name query 2 is transmitted by the access device 10 to the name server 20 using a multipath transmission protocol that supports multipath access via at least two access paths 31, 32. For example the multipath transmission protocol used for transmission is the Multipath Transmission Control Protocol (MPTCP) or Multipath Quick UDP Internet Connection (MP-QUIC) or Multipath Datagram Congestion Control Protocol (MP-DCCP) or Stream Control Transmission Protocol (SCTP).

Up on reception of the domain name query 2 the name server 20 sends a domain name response 3 back to the access device 10. In a receiving step 105 the access device receives the domain name response 3 sent by the name server 20. The domain name response 3 comprises the requested IP address or the requested domain name, in particular it comprises additional information about the requested IP address or the requested domain name, for example location, access speed, provider identification and/or security information. This information is forwarded by the resolver 12 to the application 11 within a forwarded domain name response 4.

In the evaluation step 102 the access device 10 checks whether the domain name query 2 could be transmitted to the name server with a multipath transmission protocol. For this, the access device 10 evaluates whether it is connected to the data network 30 via a multipath connectivity network that supports at least the multipath transmission protocol and/or the name server 20 supports a multipath transmission protocol. When the multi connectivity network and/or the name server 20 support a multipath transmission protocol, a supported multipath transmission protocol is selected within a selection step 103.

The selection step 103 is preferably performed by the resolver 12, wherein the resolver 12 initiates the transmission of the domain name query 2 with a multipath transmission protocol supported by the multipath connectivity network and/or the name server 20. For this, the resolver 12 generates an initial domain name query 2a using a transmission protocol that is transformed by an operating system element 13 into the domain name query 2 using the multipath transmission protocol. Preferably, the domain name query 2 is encapsulated to the multipath transmission protocol, in order to be transmitted within the transmission step (104). Alternatively, the resolver 12 generates directly the domain name query 2 using the multipath transmission protocol. When several multipath transmission protocols are supported by multipath connectivity network and/or the name server 20 the selection step 103 uses a selection logic that provides the possibility to choose the preferred multipath transmission out of a set of supported multipath transmission protocols on certain criteria. Preferably, the selection is made on transmission speed, transmission reliability, computation overhead, pre-defined prioritization, user selection and/or selection by a multipath connectivity network provider.

In order to obtain the supported multipath transmission protocols the access device 10 sends preferably a request to the multipath connectivity network and/or the name server 20. The multipath connectivity network and/or the name server informs the access device 10, in particular the resolver 12 or the application 11, about the supported multipath transmission protocols. The supported transmission protocols are stored within the access device 10.

Fig. 3 shows the performed method steps in a flow chart. The method starts with the resolving request step 100, wherein the application 11 requests a requested IP address or requested domain name with the resolving request 1. Within the domain name query step 101 the transmission of the domain name query 2 is initiated. Within the transmission step 104 the domain name query 2 is sent to the name server 20 using a multipath transmission protocol that supports multipath access via at least two access path 31, 32. Within the receiving step 105 the access device 10 receives the domain name response 3. Preferably, the evaluation step 102 and the selection step 103 are performed before the transmission step 104, wherein a preferred supported multipath transmission protocol is selected form supported multipath transmission protocols. The access device 10 is configured to perform these steps, preferably when computer program product according to the invention is executed.

### References

- 1: resolving request
- 2: domain name query
- 3: domain name response
- 4: forwarded domain name response

- 10: user equipment
- 11: application
- 12: resolver
- 13: operation system element

- 20: name server

- 30: data network, e.g. Internet
- 31: first access path / 3GPP Access / first access network
- 32: second access path/ Untrusted Non-3GPP Access / second access network
- 33: multi connectivity operator / User Plane Function, UPF

- 100: resolving request step
- 101: domain name system query step
- 102: evaluation step
- 103: selection step
- 104: transmission step
- 105: receiving step

## Claims

1. Method for domain name resolution of an access device (10) that is configured to have a multipath access via at least two access paths (31, 32) to a data network (30) comprising the following steps:
- a resolving request step (100), wherein an application (11) of the access device (10) requests a requested IP address on basis of a present domain name or requests a requested domain name on basis of a present IP address by a resolving request (1);
- a domain name system query step (101), wherein a resolver (12) initiates a transmission of at least one domain name query (2) on basis of the resolving request (1);
- a transmission step (104), wherein the domain name query (2) is sent by the access device (10) to at least one name server (20) using a multipath transmission protocol that supports multipath access via at least two of the access paths (31, 32); and
- a receiving step (105), wherein the access device (10) receives a domain name response (3) that is sent by at least one name server (20) and comprises the requested IP address or the requested domain name.

2. Method for domain name resolution according to claim 1, wherein it comprises an evaluation step (102),
in which the access device (10) evaluates whether it is connected to the data network via a multipath connectivity operator (33) that supports at least the multipath transmission protocol, and/or
in which the access device (10) evaluates whether the nameserver (20) supports at least the multipath transmission protocol.

3. Method for domain name resolution according to one of the previous claims,
wherein it comprises a selection step (103), in which the multipath transmission protocol for the transmission of the domain name query (2) is selected, when a multipath connectivity operator (33) and/or the name server (20) support the selected multipath transmission protocol, in particular wherein the selection step (103) is performed by the resolver (12).

4. Method for domain name resolution according to one the previous claims,
wherein
the resolver (12) generates an initial domain name query (2a) using a transmission protocol that is transformed by an operating system element (13) into the domain name query (2) using the multipath transmission protocol, or the resolver (12) generates the domain name query (2) using the multipath transmission protocol.

5. Method for domain name resolution according to claim 3, wherein the selection step (103) uses a pre-defined selection logic to select the multipath transmission protocol out of a set of multipath transmission protocols supported by the name server (20) and/or the multipath connectivity operator (33), in particular wherein the selection is made on transmission speed, transmission reliability, computation overhead, pre-defined prioritization, user selection and/or selection by a multipath connectivity operator (33).

6. Method for domain name resolution according to one of the previous claims, wherein the access device (10) sends a request to a multipath connectivity operator (33) and/or the name server (20) to obtain the supported multipath transmission protocols.

7. Method for domain name resolution according to one of the previous claims, wherein the multipath connectivity operator (33) and/or the name server (20) informs the access device (10) about the supported multipath transmission protocols, in particular wherein the supported multipath transmission protocols are stored within the access device (10).

8. Method for domain name resolution according to one of the previous claims, wherein the domain name query (2) is encapsulated to the multipath transmission protocol, in order to be transmitted within the transmission step (104).

9. Method for domain name resolution according to one of the previous claims, wherein the multipath transmission protocol is equipped with a redundant scheduler that generates multiple multiplied domain name queries by duplicating the domain name query (2) and sends those multiplied domain name queries to multiple name servers and/or via different access paths (31, 32).

10. Method for domain name resolution according to one of the previous claims, wherein the application (11) is informed about the supported multipath transmission protocols, in particular wherein the resolver (12) is implemented within the application (11).

11. Method for domain name resolution according to one of the previous claims, wherein the access device (10) is part of a multipath connectivity network comprising a multipath connectivity operator (33),
- wherein the name server (20) is located within the multi-connectivity operator (33), or
- wherein the name server (20) is located outside the multipath connectivity operator (33), in particular within the data network (30).

12. Method for domain name resolution according to one of the previous claims, wherein the multipath transmission protocol is the Multipath Transmission Control Protocol (MPTCP) or Multipath Quick UDP Internet Connection (MP-QUIC) or Multipath Datagram Congestion Control Protocol (MP-DCCP) or Stream Control Transmission Protocol (SCTP).

13. Access device for domain name resolution, wherein the access device (10) is configured to have a multipath-access via at least two access paths (31, 32) to a data network comprising:
- an application (11) that is configured to request a requested IP address on basis of a present domain name or to request a requested domain name on basis of a present IP address by a resolving request (1), and
- a resolver (12) that is configured to initiate a transmission of a domain query (2) on basis of the resolving request (1),
- wherein the access device (10) is configured to send the domain name query (2) to at least one name server (20) using a multipath transmission protocol that supports multipath access via at least two of the access paths (31, 32); and
- wherein the access device (10) is configured to receive a domain name response (3) that is sent by at least one name server (20) and comprises the requested IP address or the requested domain name.

14. System for domain name resolution comprising:
- an access device (10) according to claim 13; and
- at least one name server (20), wherein the name server (20) is configured to receive the domain name query (2) and to send the domain name response (3) to the access device (10) comprising the requested IP address or the requested domain name, and
- wherein the access device (10) and the name server (20) are connected via at least two access paths (31, 32).

15. Computer program product for domain name resolution which, when executed by an access device (10), causes the access device (10) to perform the steps of claim 1.
